# EUROPÄISCHE PATENTSCHRIFT

(11) **EP 2 287 043 B1**
(45) Veröffentlichungstag und Bekanntmachung des Hinweises auf die Patenterteilung: **27.06.2018**
(21) Anmeldenummer: 10171963.1
(22) Anmeldetag: 05.08.2010
(51) Int. Cl.: B60Q 11/00, B60Q 1/30, H05B 37/03, H05B 33/08

(54) **Fahrzeugbeleuchtungssystem mit Detektierung und Anzeige eines Ausfalls einer LED-Fahrzeugleuchte**
Vehicle lighting system with detection and display of a malfunction of an LED vehicle light
Système d'éclairage de véhicule doté d'une détection et d'un affichage de panne d'une lampe de véhicule à DEL

(30) Priorität: 21.08.2009 DE 102009038282
(43) Veröffentlichungstag der Anmeldung: 23.02.2011
(73) Patentinhaber: BPW Bergische Achsen KG, 51674 Wiehl (DE)
(72) Erfinder: Schneider, Peter, 51597, Morsbach (DE); Kottmann, Ralf, 51491, Overath (DE)
(74) Vertreter: Bungartz Christophersen Partnerschaft mbB Patentanwälte

(56) Entgegenhaltungen:
- EP-A1- 1 702 802
- WO-A2-2008/011155
- DE-A1-102004 045 435

## Beschreibung

Die Erfindung betrifft ein Fahrzeugbeleuchtungssystem mit Detektierung und Anzeige eines Ausfalls oder Teilausfalls einer LED-Fahrzeugleuchte nach dem Oberbegriff des Anspruchs 1.

Auf dem Fahrzeugsektor werden zunehmend LED-Signalleuchten eingesetzt, da diese neben verbesserten lichttechnischen Eigenschaften eine höhere Standzeit im Vergleich zu konventionellen Glühbirnen haben. Gleichwohl kann es auch bei LED-Signalleuchten zu einem Ausfall kommen. Gesetzliche Bestimmungen für Kraftfahrzeuge schreiben vor, dass zumindest die Leuchtmittel der Brems- sowie der Blinkleuchten des Fahrzeuges hinsichtlich eines Ausfalls detektiert werden müssen, so dass der Fahrer des Fahrzeuges den Defekt erkennen kann. Diese Vorschriften gelten gleichermaßen für herkömmliche Glühbirnen wie für LED-Signalleuchten. Die Ansteuerung von LED-Fahrzeugleuchten erfolgt meist unter Verwendung von Lichtsteuermodulen, die, wie zum Beispiel in der DE 196 18 010 C1 beschrieben, zusätzlich dazu eingerichtet sein können, die Stromaufnahme der Leuchte auf Kurzschluss und Leerlauf überwachen.

Aus der DE 295 15 223 U1 ist eine mit Leuchtdioden bestückte Fahrzeugrückleuchte bekannt, bei der die den Leuchtdioden zugeordneten Strombegrenzungswiderstände so dimensioniert sind, dass bei Ausfall von Leuchtdioden der Strom in Parallelzweigen, in denen sich weitere Leuchtdioden befinden, derart ansteigt, dass diese Leuchtdioden zerstört werden, der Stromfluss unterbrochen wird und die Leuchte ausfällt.

Eine andere Möglichkeit der Detektierung und Anzeige des Leuchtmittelausfalls an einer LED-Fahrzeugleuchte beschreibt die EP 1 000 806 B1. Das Lichtsteuermodul ist hier mit einer Schalt- und Auswertelogik versehen, die durch Auswertung des Spannungsabfalls nicht nur den Ausfall der LED-Leuchte diagnostizieren kann, sondern auch die Ausfallursache. Hierzu ist in die jeweilige LED-Leuchte eine Diagnoseschaltung integriert, die im Fehlerfall eine Stromsenke schaltet, was zu einer Modulation des Stroms führt. Diese lässt sich im Lichtsteuergerät erfassen und durch die Schalt- und Auswertelogik in ein auswertbares Spannungssignal umwandeln, um daraus die Art des Fehlers abzuleiten. Der Fehler wird in einem nicht-flüchtigen Speicher abgespeichert, und ggf. auf einem Anzeigeelement für den Fahrer dargestellt.

Andere Möglichkeiten der Detektierung und Anzeige eines Leuchtmittelausfalls sind in der EP 1 702 802 A1 und in der DE 10 2004 045 435 A1 beschrieben. Bei dem für ein Anhängerfahrzeug bestimmten, mit herkömmlichen Glühlampen arbeitenden Beleuchtungssystem nach der EP 1 702 802 A1 registriert ein Überwachungsmodul, welches Bestandteil einer Lichtsteuereinheit ist, einen Abfall des Stromverbrauchs. Daraufhin leitet die Lichtsteuereinheit Steueranweisungen der ausgefallenen Leuchte an eine andere Leuchte des Anhängerfahrzeugs um. Alternativ wird bei einem Ausfall z. B. des rechten Blinklichts des Anhängers mit Hilfe einer Nachrichten generierenden Routine eine Fehlfunktionsmeldung erzeugt, welche der Fehlfunktion einer am Zugfahrzeug ausgefallenen Leuchte entspricht. Die im Zugfahrzeug vorhandene Bordelektronik zeigt daraufhin eine Fehlfunktion der betreffenden Leuchte an. An der Konfiguration der Bordelektronik des Zugfahrzeuges sind keinerlei Änderungen notwendig.

Zur Überwachung einer LED-Leuchte ist aus der WO 2008/011155 A2 ein Beleuchtungsbordnetz aus einem ersten Schaltkreis und einem zweiten, über einen Transformator mit dem ersten Schaltkreis gekoppelten zweiten Schaltkreis bekannt. Ein Fotowiderstand in dem ersten Schaltkreis erfasst das von der LED-Leuchte abgegebene Licht. Erfasst der Fototransistor kein Licht mehr, so erhöht sich sein Widerstand und zugleich reduziert sich der Stromfluss im ersten Schaltkreis, wodurch ein Schalter oder Transistor den ersten Schaltkreis unterbricht, was dem Fahrzeugführer angezeigt wird.

Es ist das Ziel der Erfindung, bei Rückleuchteneinheiten mit Leuchtdioden (LED) eine Sensierung des Ausfalls der LED zu ermöglichen, ohne dass lange Stromversorgungsleitungen mit den für herkömmliche Glühlampen erforderlichen Leitungsquerschnitten erforderlich sind. Geeignet soll das System besonders für die lichttechnische Ausrüstung eines Anhängerfahrzeuges und insbesondere eines Nutzfahrzeuganhängers sein.

Zur Lösung dieser Aufgabe wird ein Fahrzeugbeleuchtungssystem mit den Merkmalen des Anspruchs 1 vorgeschlagen.

Ein solches Fahrzeugbeleuchtungssystem ist von besonderem Vorteil bei Fahrzeugverbänden aus einem angetriebenen Zugfahrzeug und einem gezogenen Anhängerfahrzeug. In dem zu dem Zugfahrzeug führenden Stromkreis befindet sich eine eine konventionelle Glühlampe simulierende Last, etwa ein ohmscher Widerstand. Dieser befindet sich in einer Anschlussbox oder in einem geeigneten andersartigen Gehäuse im vorderen, stirnseitigen Bereich des Anhängerfahrzeuges, die auch die Steckverbindung für jenen elektrischen Kabelanschluss aufnimmt, der das Anhängerfahrzeug mit dem Zugfahrzeug verbindet. Das System erfasst den Zustand "Spannung" bzw. "ohne Spannung" an einzelnen oder an Reihen oder Gruppen der LED-Signalleuchten und übermittelt der zentralen Lichtsteuereinheit ein entsprechendes Zustandssignal. Die Lichtsteuereinheit schaltet eine Unterbrechung des Stromkreises zum Zugfahrzeug dann, wenn das Zustandssignal "LED ohne Spannung" detektiert wird, wodurch ein Defekt einzelner oder mehrerer LED-Signalleuchten für den Fahrer anhand der konventionellen Anzeigemittel erkennbar ist. Das Verfahren beruht daher auf einer Lastsimulation in Abhängigkeit vom tatsächlichen Funktionsstatus in der LED-Leuchteneinheit.

Bei einem Nutzfahrzeuganhänger erfolgt die Lastsimulation in der Anschlussbox im Bereich der vorderen Fahrzeugstirnfläche, wo sich auch die Steckverbinderaufnahme des Kabels zum Zugfahrzeug befindet.

Weitere Vorteile und Einzelheiten ergeben sich auch aus der nachfolgenden Beschreibung, in der auf die zugehörige Zeichnung Bezug genommen wird.

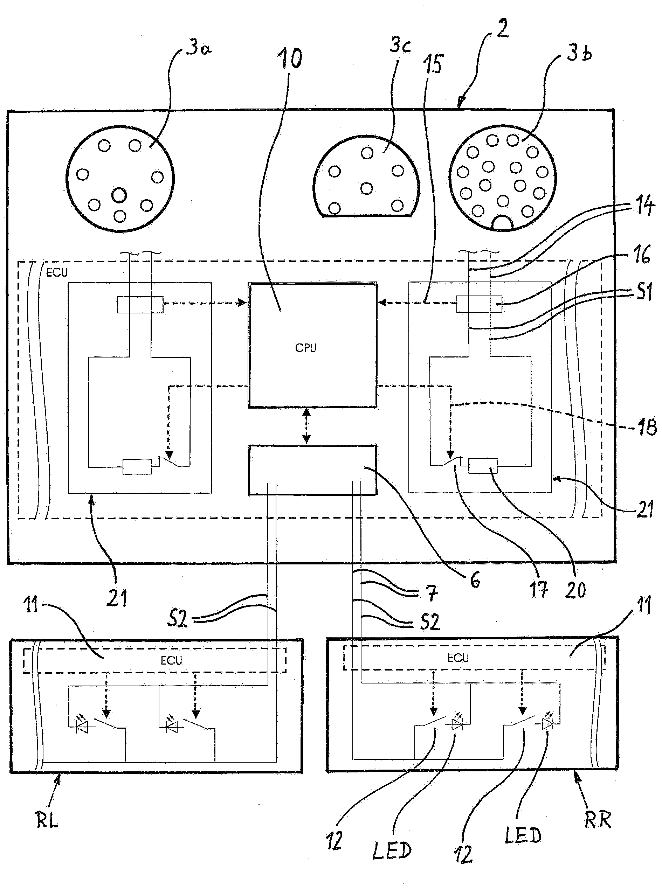

Dargestellt ist stark schematisch ein Teil der lichttechnischen Ausrüstung eines gezogenen Fahrzeuges, und insbesondere eines Nutzfahrzeuganhängers oder -aufliegers. Zur elektrischen Verbindung mit dem angetriebenen Zugfahrzeug gehört zu der Fahrzeugbeleuchtungsvorrichtung eine nahe der vorderen Bordwand des Anhängerfahrzeuges befestigte Anschlussbox 2. Daran befindet sich, zu dem Zugfahrzeug hin gerichtet, mindestens ein Verbindungssteckanschluss, über den sich die elektrische Verbindung mit entsprechenden elektrischen Anschlüssen des Zugfahrzeuges herstellen lässt. Die Zeichnung zeigt mehrere unterschiedliche Varianten von Verbindungssteckanschlüssen 3a bis 3c.

Weitere Bestandteile der Fahrzeugbeleuchtungsvorrichtung sind am rückwärtigen Ende des Fahrzeuganhängers eine linke Rückleuchte RL und eine rechte Rückleuchte RR, die jeweils Rückleuchteneinheiten zusammenfassen und üblicherweise die Bremsleuchte, die jeweilige Blinkerleuchte, das Rücklicht und ggf. ein Rückfahrlicht, eine Nebelschlussleuchte oder die Kennzeichenbeleuchtung enthalten. Alle Rückleuchten sind nicht mit herkömmlichen Glühbirnen, sondern mit Leuchtdioden (LED) bestückt.

In der Anschlussbox 2 befindet sich eine zentrale Lichtsteuereinheit (CPU) 10 des Fahrzeuganhängers. Diese kann entweder in der Weise ausgestaltet sein, dass sie der zentrale Logistikknoten nur der Beleuchtungs- und Lichttechnik des Fahrzeuganhängers ist, oder aber die Lichtsteuereinheit 10 kann signaltechnisch mit anderen Steuerkomponenten des Fahrzeuges verknüpft sein, z. B. mit einem Bremsensteuergerät des Fahrzeuges.

Die zentrale Lichtsteuereinheit 10 steht über eine als bidirektionaler BUS 7 ausgestaltete Leitung in Verbindung mit den Rückleuchten RL, RR. Die BUS-Stränge arbeiten mit Gleichstrom, vorzugsweise dem Gleichstrom des 24-Volt-Bordnetzes des Zugfahrzeuges, wobei zur Übertragung der BUS-Signale dem Gleichstrom ein Wechselstrom als Signalstrom aufmoduliert ist. Zum Aufmodulieren bzw. Auslesen der BUS-Signale ist jeder BUS-Strang 7 auf Seiten der Anschlussbox 2 mit einer BUS-Signalanbindung 6, und auch auf Seiten jeder Rückleuchte RL, RR mit einer BUS-Signalanbindung 11 verbunden. Die Signalanbindungen 6, 11 sind als Transceiver mit Sende- und Empfangsmodul ausgebildet. Die Verbindung mit dem BUS-Strang erfolget üblicherweise über entsprechende Steckkontakte.

Die für die Bremsleuchten und Blinkleuchten als Leuchtmittel eingesetzten Leuchtdioden (LED) sind üblicherweise gruppenweise nach Art einer Matrix geschaltet, wobei jede Gruppe aus parallelen LED-Reihen besteht, die ihrerseits aus mehreren einzelnen LED bestehen.

Die Funktion oder ein Ausfall einzelner LED oder einer Reihe oder Gruppe oder Reihe von LED ist mittels im Folgenden näher bezeichneter Maßnahmen detektierbar und dem Fahrzeugführer im Zugfahrzeug anzeigbar. Diese Anzeige kann konventioneller Art sein, z. B. eine Kontrollleuchte am Armaturenbrett des Zugfahrzeuges.

Die zentrale Lichtsteuereinheit 10 verfügt über einen Eingang für eine Signalleitung 15, die von einer Signalauswertung 16 kommt. Die Signalauswertung 16 befindet sich ebenfalls in der Anschlussbox 2. Sie dient als Mittel zur Erfassung der Spannung in der Verbindungsleitung 14, und damit der Spannung in dem über zumindest eine der Verbindungssteckanschlüsse 3a - 3c führenden Stromkreis S1 zwischen Zugfahrzeug und der Anschlussbox des Anhängerfahrzeuges. Die Spannung in dem Stromkreis S1 ist gleich der Betriebsspannung des Fahrzeugs. Diese beträgt bei Nutzfahrzeugen 24 Volt.

Wird also im Zugfahrzeug durch den Fahrer z. B. der Blinker rechts betätigt, wird der Stromkreis S1 geschlossen, und dies wird durch die Signalauswertung 16 der zentralen Lichtsteuereinheit 10 detektiert. Die Lichtsteuereinheit 10 initiiert, d.h. schaltet daraufhin über die BUS-Signalanbindung 6 das Einschalten der Leuchtdioden LED der rechten Blinklichter der Rückleuchte RR über den Stromkreis S2. Die BUS-Signalanbindung 11 in der Rückleuchteneinheit schaltet über integrierte Schaltelemente 12 die LEDs des Blinklichts einzeln oder gruppenweise ein und aus.

Zwischen Zugfahrzeug und den Leuchtdioden LED der Rückleuchten RL, RR bestehen daher zwei voneinander getrennte elektrische Stromkreise S1, S2. Der erste Stromkreis S1 kommt vom Zugfahrzeug und endet in der Anschlussbox 2 des Anhängerfahrzeuges. Der durch den BUS-Strang gebildete zweite Stromkreis S2 führt von der Anschlussbox 2 zu den Leuchtmitteln, also den Leuchtdioden LED. Da die LED selbst einen sehr geringen Stromverbrauch haben, kommt die Verkabelung des zweiten Stromkreises S2 mit geringen Querschnitten der stromführenden Leiter aus.

Integriert in die zentrale Lichtsteuereinheit 10 ist ein Signalauswertemodul. Dieses kann über den Stromkreis S2 detektieren, ob an den LED eine elektrische Spannung anliegt, oder nicht. Wird mittels des Auswertemoduls der zentralen Lichtsteuereinheit 10 festgestellt, dass die LED Spannung führend sind, gibt die zentrale Steuereinheit 10 über eine Schalteransteuerung 18 ein Schließsignal an einen Unterbrechungsschalter 17, der z. B. als Transistor ausgebildet sein kann. Der Unterbrechungsschalter 17 ist Bestandteil des ersten, vom Zugfahrzeug kommenden Stromkreises S1, in den auch eine elektrische und/oder elektronische Last 20, vorzugsweise ein ohmscher Widerstand als Verbraucher, geschaltet ist. Der Widerstand 20 befindet sich ebenfalls in der Anschlussbox 2 und simuliert als Verbraucher eine - nicht vorhandene - herkömmliche Glühbirne mit einer Leistung von etwa 21 Watt. Wird von dem Auswertemodul der Lichtsteuereinheit 10 der Zustand "LED ohne Spannung" festgestellt, gibt die Steuereinheit 10 über die Schalteransteuerung 18 ein Öffnungssignal an den Transistor 17, wodurch der erste Stromkreis S1 unterbrochen wird. Diese Unterbrechung wird im Zugfahrzeug als Fehler bzw. Ausfall der Fahrzeugleuchte erkannt und ist über die Verbindungsleitung 14 zum Zugfahrzeug im Zugfahrzeug herkömmlich anzeigbar, etwa über die entsprechenden Kontrollleuchten oder -anzeigen am Armaturenbrett.

Der als Schalter zum Unterbrechen des ersten Stromkreises S1 dienende Transistor 17 bildet daher gemeinsam mit dem eine herkömmliche Glühbirne emulierenden Widerstand 20 eine Lastsimulation 21 zur Vorgabe eines intakten Leuchtmittels bzw. Leuchtmittelstromkreises zur Anzeige eines Ausfalls der LED-Leuchtmittel auch an einem entfernten Ort, hier der Armaturentafel des Zugfahrzeuges, und mit den üblichen Anzeigemitteln, etwa der vorhandenen Kontrollleuchte am Armaturenbrett. Die Lastsimulation erfolgt in Abhängigkeit vom tatsächlichen Funktionsstatus der LED-Leuchteneinheit. Die Versorgung über den zweiten Stromkreis S2 kann ausschließlich mit den für LED-Leuchtmitteln ausreichenden, geringen Kabelquerschnitten erfolgen. Angesichts der vor allem bei einem Sattelauflieger erheblichen Fahrzeuglänge von zumeist mehr als 6 Metern, und im Rahmen eines die lichttechnische Fahrzeugversorgung übernehmenden BUS-Systems sind erheblich schlankere elektrische Leitungsstränge möglich.

### Bezugszeichen

- 2: Anschlussbox
- 3a: ISO-Verbindungssteckanschluss
- 3b: ISO-Verbindungssteckanschluss
- 3c: ISO-Verbindungssteckanschluss
- 6: BUS-Signalanbindung, Transceiver
- 7: bidirektionaler BUS
- 10: zentrale Lichtsteuereinheit (CPU)
- 11: BUS-Signalanbindung, Transceiver
- 12: Schaltelement
- 14: Verbindungsleitung zum Zugfahrzeug
- 15: Signalleitung
- 16: Signalauswertung
- 17: Unterbrechungsschalter, Transistor
- 18: Schalteransteuerung
- 20: elektrische oder elektronische Last
- 21: Lastsimulation

- LED: Leuchtdiode
- RL: Rückleuchte links
- RR: Rückleuchte rechts
- S1: erster Stromkreis
- S2: zweiter Stromkreis

## Patentansprüche

1. Fahrzeugbeleuchtungssystem zur Verwendung in einer Fahrzeugkombination aus Zugfahrzeug und Anhängerfahrzeug, mit Detektierung und Anzeige eines Ausfalls oder Teilausfalls einer LED-Fahrzeugleuchte (RL, RR), z. B. einer Brems- oder Blinkerleuchte, mit Mitteln (16) zur Erkennung der Unterbrechung eines ersten Stromkreises (S1) und zur Anzeige an den Fahrer des Fahrzeuges, wobei in dem ersten Stromkreis (S1) eine Last (20), vorzugsweise ein ohmscher Widerstand, sowie ein Unterbrechungsschalter (17) integriert ist, **dadurch gekennzeichnet, dass** die LED-Fahrzeugleuchte (RL, RR) mittels eines separaten zweiten Stromkreises (S2) versorgt wird, dass die LED-Fahrzeugleuchte (RL, RR) über eine zentrale Lichtsteuereinheit (10) angesteuert wird, die mit der LED-Fahrzeugleuchte (RL, RR) über einen bidirektionalen Daten-BUS (7) verbunden ist, welcher neben der Stromversorgung der LED-Leuchte auch zur Übertragung von Ausfallsignalen eingerichtet ist, und dass der Unterbrechungsschalter (17) durch die zentrale Lichtsteuereinheit (10) ansteuerbar ist.

2. Fahrzeugbeleuchtungssystem nach Anspruch 1, **dadurch gekennzeichnet, dass** die Zuschaltung der Last (20) im vorderen, stirnseitigen Bereich des Anhängerfahrzeuges in einer Anschlussbox (2) erfolgt, welche mit mindestens einem Verbindungsanschluss (3a, 3b, 3c) der elektrischen Verbindung zwischen Anhängerfahrzeug und Zugfahrzeug versehen ist.

3. Fahrzeugbeleuchtungssystem nach Anspruch 2, **dadurch gekennzeichnet, dass** die Lichtsteuereinheit (10) in der Anschlussbox (2) angeordnet ist.

4. Fahrzeugbeleuchtungssystem nach einem der Ansprüche 2 oder 3, **dadurch gekennzeichnet, dass** die aus dem Unterbrechungsschalter (17) und der Last (20) bestehende Lastsimulation (21) in der Anschlussbox (2) angeordnet ist.

5. Fahrzeugbeleuchtungssystem nach einem der Ansprüche 2 bis 4, **dadurch gekennzeichnet, dass** der erste Stromkreis (S1), von dem Zugfahrzeug kommend, im Anhängerfahrzeug nur bis zu der Anschlussbox (2) mit dem Unterbrechungsschalter (17) und der Last (20) und von dort wieder zum Zugfahrzeug verläuft.

6. Fahrzeugbeleuchtungssystem nach einem der vorangegangenen Ansprüche, **dadurch gekennzeichnet, dass** die Leitungen des bidirektionalen Daten-BUS (7) zwischen der Lichtsteuereinheit (10) und der LED-Fahrzeugleuchte eine Länge von mindestens 6 Metern aufweisen.

7. Fahrzeugbeleuchtungssystem nach einem der vorangehenden Ansprüche, **dadurch gekennzeichnet, dass** die Lichtsteuereinheit (10) das Ansteuersignal für die LED-Fahrzeugleuchte aus dem ersten Stromkreis (S1) erhält.

## Claims

1. Vehicle lighting system for use in a vehicle combination composed of a towing vehicle and a trailer vehicle, comprising detection and display of a failure or partial failure of an LED vehicle luminaire (RL, RR), for example a brake or indicator luminaire, comprising means (16) for identifying the interruption of a first circuit (S1) and for indicating this to the driver of the vehicle, wherein a load (20), preferably an ohmic resistor, and an interrupter switch (17) is integrated in the first circuit (S1), **characterized in that** the LED vehicle luminaire (RL, RR) is supplied with power by means of a separate second circuit (S2), **in that** the LED vehicle luminaire (RL, RR) is actuated by means of a central light control unit (10), which is connected to the LED vehicle luminaire (RL, RR) by means of a bidirectional data bus (7), which, in addition to supplying power to the LED light, is also configured to transmit failure signals, and **in that** the interrupter switch (17) can be actuated by the central light control unit (10).

2. Vehicle lighting system according to Claim 1, **characterized in that** the load (20) is connected in the front, end-side region of the trailer vehicle in a connection box (2), which is provided with at least one connection terminal (3a, 3b, 3c) of the electrical connection between the trailer vehicle and the towing vehicle.

3. Vehicle lighting system according to Claim 2, **characterized in that** the light control unit (10) is arranged in the connection box (2).

4. Vehicle lighting system according to either of Claims 2 and 3, **characterized in that** the load simulation system (21) consisting of the interrupter switch (17) and the load (20) is arranged in the connection box (2).

5. Vehicle lighting system according to one of Claims 2 to 4, **characterized in that** the first circuit (S1), coming from the towing vehicle, runs in the trailer vehicle only up to the connection box (2) comprising the interrupter switch (17) and the load (20) and from there back to the towing vehicle.

6. Vehicle lighting system according to one of the preceding claims, **characterized in that** the lines of the bidirectional data bus (7) between the light control unit (10) and the LED vehicle luminaire have a length of at least 6 metres.

7. Vehicle lighting system according to one of the preceding claims, **characterized in that** the light control unit (10) receives the actuation signal for the LED vehicle luminaire from the first circuit (S1).

## Revendications

1. Système d'éclairage d'un véhicule automobile destiné à être utilisé dans un train de véhicules composé d'un véhicule tracteur et d'un véhicule remorque, doté d'une détection et d'une signalisation d'un dysfonctionnement ou d'un dysfonctionnement partiel d'un feu de véhicule à LED (RL, RR), par ex. d'un feu de freinage ou d'un clignotant, comprenant des moyens (16) d'identification de l'interruption d'un premier circuit électrique (S1) et de signalisation à l'attention du conducteur du véhicule, dans le premier circuit électrique (S1) étant intégrée une charge (20), de préférence une résistance ohmique, ainsi qu'un interrupteur (17), **caractérisé en ce que** le feu de véhicule à LED (RL, RR) est alimenté au moyen d'un deuxième circuit électrique (S2) séparé, **en ce que** le feu de véhicule à LED (RL, RR) est amorcé via une unité de commande d'éclairage (10) centralisée qui est connectée avec le feu de véhicule à LED (RL, RR) par l'intermédiaire d'un BUS de données (7) bidirectionnel, lequel en sus de l'alimentation électrique du feu à LED est également aménagé pour transmettre des signaux de dysfonctionnement, et **en ce que** l'interrupteur (17) est amorçable par l'unité de commande d'éclairage (10) centralisée.

2. Système d'éclairage d'un véhicule automobile selon la revendication 1, **caractérisé en ce que** la mise en circuit de la charge (20) s'effectue dans la région antérieure, côté frontal du véhicule remorque dans une boîte de raccordement (2), laquelle est dotée d'au moins une borne de raccordement (3a, 3b, 3c) pour la connexion électrique entre le véhicule remorque et le véhicule tracteur.

3. Système d'éclairage d'un véhicule automobile selon la revendication 2, **caractérisé en ce que** l'unité de commande d'éclairage (10) est placée dans la boîte de raccordement (2).

4. Système d'éclairage d'un véhicule automobile selon l'une quelconque des revendications 2 ou 3, **caractérisé en ce que** la simulation de charge (21) composée de l'interrupteur (17) et de la charge (20) est placée dans la boîte de raccordement (2).

5. Système d'éclairage d'un véhicule automobile selon l'une quelconque des revendications 2 à 4, **caractérisé en ce que** le premier circuit électrique (S1) s'étend, en partant du véhicule tracteur dans le véhicule remorque, seulement jusqu'à la boîte de raccordement (2) avec l'interrupteur (17) et la charge (20) et de là, à nouveau vers le véhicule tracteur.

6. Système d'éclairage d'un véhicule automobile selon l'une quelconque des revendications précédentes, **caractérisé en ce qu'**entre l'unité de commande d'éclairage (10) et le feu de véhicule à LED, les lignes du BUS de données (7) bidirectionnel présentent une longueur d'au moins 6 mètres.

7. Système d'éclairage d'un véhicule automobile selon l'une quelconque des revendications précédentes, **caractérisé en ce que** l'unité de commande d'éclairage (10) reçoit le signal d'amorçage pour le feu de véhicule à LED à partir du premier circuit électrique (S1).
